(19) Europäisches Patentamt

European Patent Office

Office européen des brevets

(11) **EP 1 089 886 B1**

(12) **FASCICULE DE BREVET EUROPEEN**

(45) Date de publication et mention
de la délivrance du brevet:
**27.03.2002 Bulletin 2002/13**

(51) Int Cl.⁷: $B60C\ 15/02$, $B60C\ 3/00$, $B60C\ 3/04$, $B60C\ 9/20$

(21) Numéro de dépôt: **99922143.5**

(22) Date de dépôt: **29.04.1999**

(86) Numéro de dépôt international:
**PCT/EP99/02910**

(87) Numéro de publication internationale:
**WO 99/58352 (18.11.1999 Gazette 1999/46)**

(54) **PNEUMATIQUE A ARMATURE DE SOMMET TRIANGULEE**

REIFEN MIT TRIANGULIERTEM VERSTÄRKUNGSGÜRTEL

TYRE WITH LACED BREAKER PLY REINFORCEMENT

(84) Etats contractants désignés:
**DE ES FR GB IT**

(30) Priorité: **11.05.1998 FR 9806001**

(43) Date de publication de la demande:
**11.04.2001 Bulletin 2001/15**

(73) Titulaire: **COMPAGNIE GENERALE DES ETABLISSEMENTS MICHELIN-MICHELIN & CIE 63040 Clermont-Ferrand Cédex (FR)**

(72) Inventeurs:
• **MERINO LOPEZ, Jose**
  **F-63200 Riom (FR)**

• **AUXERRE, Pascal**
  **F-63130 Royat (FR)**

(74) Mandataire: **Diernaz, Christian**
  **Michelin & Cie**
  **Service SGD/LG/PI-LAD**
  **63040 Clermont-Ferrand Cedex 09 (FR)**

(56) Documents cités:
FR-A- 1 267 264          GB-A- 359 110
US-A- 2 037 640          US-A- 3 486 547
US-A- 3 631 913          US-A- 4 029 139

**Description**

La présente invention concerne un pneumatique à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

Un pneumatique, dit "Poids-Lourds", comprend généralement une armature de carcasse radiale formée d'une seule nappe d'éléments de renforcement métalliques, ancrée dans chaque bourrelet à au moins une tringle. Ladite armature de carcasse est radialement surmontée d'une armature de sommet formée d'au moins deux nappes de travail d'éléments de renforcement métalliques inextensibles; parallèles entre eux dans chaque nappe, et croisés d'une nappe à la suivante en faisant avec la direction circonférentielle du pneumatique des angles pouvant être compris entre 10° et 45°. Les dites nappes de travail sont généralement complétées par une nappe dite de protection d'éléments de renforcement métalliques extensibles, et, soit par une nappe dite de triangulation d'éléments métalliques inextensibles orientés par rapport à la direction circonférentielle d'un angle de manière connue supérieur à 45°, soit par une nappe d'éléments de renforcement orientés circonférentiellement, soit par les deux types de nappes précédentes.

Les pneumatiques "Poids-Lourds" ont des rapports de forme H/S, H étant la hauteur du pneumatique sur jante et S la largeur axiale maximale dudit pneumatique lorsqu'il est monté sur sa jante de service et gonflé à la pression recommandée, généralement compris entre 0,65 et 1,0. Cependant apparaissent actuellement des pneumatiques "Poids-Lourds" ayant des rapports de forme H/S plus faibles, de l'ordre de 0,45 par exemple.

Il est connu, quelque soit le type de pneumatique, que le compromis entre les différentes propriétés qui sont demandées est difficile à réaliser, l'amélioration d'une des performances étant malheureusement le plus souvent accompagnée de la dégradation d'une ou plusieurs autres propriétés.

De nombreuses tentatives ont eu lieu pour essayer d'obtenir le meilleur compromis, et plus particulièrement en ce qui concerne les pneumatiques de Tourisme. En vue d'améliorer le confort, le résistance aux perforations, ainsi que l'usure de la bande de roulement, le document anglais GB 359 110 propose de conférer au pneumatique, lors du moulage dans le moule de vulcanisation, une forme très proche de la forme du pneumatique sous charge, alors que la bande de roulement est rendue inextensible circonférentiellement par la présence d'une armature de câbles ou fils continus circonférentiellement. Le pneumatique est ainsi moulé avec un rapport de forme peu élevé, des flancs très incurvés et une armature de carcasse ancrée, de part et d'autre du plan équatorial, à une tringle de bourrelet telle que la tangente commune à la tringle et au profil méridien de l'armature de carcasse fasse, au point de tangence entre ledit profil et la tringle et par rapport à une parallèle à l'axe de rotation du pneumatique, un angle ouvert axialement vers l'extérieur et radialement vers l'intérieur.

Le brevet US 3 486 547, en vue d'améliorer très nettement le compromis entre le confort, la tenue de route et stabilité du pneumatique, décrit aussi un pneumatique de rapport de forme H/S faible, pouvant être compris entre 0,25 et 0,75, et dans lequel les régions des flancs proches des bords de jante sont sensiblement parallèles à l'axe de rotation du pneumatique, et les dites régions étant renforcées par des anneaux inextensibles radialement, les dits anneaux pouvant être de constitution variable. Une telle architecture impose le montage sur une jante de faible largeur W par rapport à la largeur axiale maximale S dudit pneumatique, le rapport W/S étant compris entre 0,25 et 0,75.

Un tel pneumatique est aussi décrit dans le brevet FR 1 267 264, et permettrait de concilier le confort, la tenue de route, une faible résistance au roulement et une grande résistance à l'usure. En vue d'augmenter considérablement la flexibilité structurelle d'ensemble de l'armature de carcasse, tout en remédiant aux inconvénients qui accompagnent automatiquement cette augmentation, ladite armature de carcasse présente des flancs très bombés, et se trouve surmontée d'une armature de sommet cylindrique, inextensible circonférentiellement et formée préférentiellement d'éléments de renforcement longitudinaux. L'armature de carcasse présente, aux voisinage des tringles d'ancrage des parties à tangentes horizontales, ou situées à des rayons inférieurs aux rayons des rebords de jante, les dites parties étant renforcées, dans le cas décrit, par des éléments de renforcement circonférentiels.

Le brevet US 4 029 139, correspondant au préambule de la revendication 1, concerne aussi un pneumatique à rapport de forme H/S préférentiellement compris entre 0,40 et 0, 60 et tel que le rapport W/S de la largeur de jante W sur la largeur axiale maximale S du pneumatique soit inférieur à 0,65. Il décrit un système particulier d'accrochage des bourrelets sur la jante, tel que les parties de bourrelet proches de la jante soient sensiblement horizontales.

La mise au point d'un pneumatique de type "Poids-Lourds" et l'adaptation au dit pneumatique des enseignements cités ci-dessus se sont montrées décevantes. Si, effectivement le confort est amélioré, l'endurance générale du pneumatique ne l'est pas, que ce soit l'endurance sur usure, ou l'endurance de fatigue des différentes armatures du pneumatique.

L'invention a pour but d'améliorer l'endurance générale de ce type de pneumatique , tout en améliorant la résistance au roulement.

Le pneumatique, conforme à l'invention, de rapport de forme H/S compris entre 0,3 et 0,8, comprenant une armature de carcasse <u>formée d'éléments de renforcement radiaux,</u> de rayon équatorial $R_{SS} \pm \Delta R_{SS}$, $\Delta R_{SS}$ étant égal à 1 fois l'épaisseur minimale de ladite armature, et surmontée radialement d'une armature de sommet sensiblement ou quasi-cylindrique, formée d'au moins une nappe de travail d'éléments de renforcement circonférentiels, ladite armature de carcasse étant, de part et d'autre du plan équatorial, d'une part tangente à un cercle C dit d'accrochage, la tangente commune au dit cercle C et au profil méridien de l'armature de carcasse faisant au point de tangence entre ledit profil et le cercle d'accrochage et par rapport à une parallèle à l'axe de rotation passant par ledit point de tangence, un angle compris entre + 20° et - 80°, et d'autre part, dans sa partie comprise entre ledit point de tangence et le point de plus grande largeur axiale, pourvue d'une armature de renforcement d'éléments inextensibles circonférentiellement. Il est caractérisé en ce que, vu en section méridienne, la ligne moyenne de chaque moitié de la partie principale de l'armature de carcasse a un profil méridien, lorsque le pneumatique est monté sur sa jante de service et gonflé à sa pression recommandée, composé de quatre arcs de cercle :

* un premier arc de cercle TA de rayon $r'_1$, compris entre les ou égal aux quantités $r_1$ et/ou $2r_1$, d'une part tangent au cercle d'accrochage C, concentrique au cercle du rebord de jante de rayon $r_J$, disposé radialement au dessus et étant distant dudit rebord d'une quantité $e_T$ au moins égale à deux fois l'épaisseur minimale e de l'armature de carcasse, et d'autre part présentant un point d'intersection A avec

* un deuxième arc de cercle AE, de rayon $r''_1$, compris entre les quantités $r_1$ et $2r_1$, tangent à la droite perpendiculaire à l'axe de rotation passant par le point E de plus grande largeur axiale,

* un troisième arc de cercle EF de rayon $r_2$, tangent au deuxième arc de cercle AE au point E de plus grande largeur axiale et tangent à un quatrième arc de cercle FG, parallèle à la quasi-cylindrique armature de sommet, en un point F, distant de la droite parallèle à l'axe de rotation passant par le centre $O_J$ du cercle d'accrochage C d'une quantité d, les quantités d, $r_1$, $r_2$ satisfaisant aux relations :

$$d = r_2 + (r_1 + ar_J + e_T) \cos \alpha \qquad \text{et} \qquad r_1 = r_2 R_{SS}/(R_{SS} - r_2),$$

$\alpha$ étant l'angle que fait la tangente en T avec une parallèle à l'axe de rotation, et a étant une constante pouvant prendre les valeurs - 1, 0, ou + 1,

* un quatrième arc de cercle FG de rayon $R_{TC}$ égal au rayon transversal $R_T$ de l'armature de sommet, diminué d'au plus l'épaisseur minimale e de l'armature de carcasse,

et en ce que la largeur de l'armature de sommet de travail est comprise entre la distance séparant les deux points F de tangence dudit profil méridien à l'armature de sommet et ladite distance augmentée de $2r_2/3$.

Il faut entendre par armature de sommet quasi-cylindrique une armature de sommet dont le rayon de courbure transversal est au moins égal à 4 fois son rayon de courbure équatorial.

Les éléments de renforcement radiaux de l'armature de carcasse peuvent être en matériau textile du fait de la tension faible supportée par chaque élément de renforcement, la tension supportée étant due à la pression de gonflage intérieure et fonction du profil méridien de ladite armature de carcasse.

De manière avantageuse, l'armature de sommet est constituée d'une part d'une nappe axialement continue et formée d'éléments de renforcement circonférentiels inextensibles, par exemple des câbles métalliques, (sont dits inextensibles des éléments présentant sous une force de traction égale à 10 % de la force de rupture un allongement relatif inférieur à 0,5 %), et d'autre part de deux nappes d'éléments de renforcement inextensibles, parallèles entre eux dans chaque nappe et croisés d'une nappe à la suivante en faisant avec la direction circonférentielle un angle pouvant être compris entre 20° et 60°, et préférentiellement entre 40° et 55°.

Il faut entendre par largeur axiale de l'armature de sommet de travail la largeur 1a plus grande des deux largeurs que sont la largeur axiale de la nappe de l'armature de sommet formée d'éléments circonférentiels et la largeur axiale de 1a nappe de l'armature de sommet formée d'éléments inclinés la moins large.

L'armature de carcasse est, de chaque côté du plan équatorial et dans sa partie comprise radialement entre le point de tangence au cercle d'accrochage et le point de plus grande largeur axiale, complétée par une armature de renforcement sensiblement inextensible circonférentiellement, armature qui peut être constituée d'une simple tringle de type connu (tressée, "paquet", à fils rectangulaires ou autres), ou d'au moins une nappe d'éléments circonférentiels inextensibles, de préférence métalliques, comme connu en soi. Ladite armature de renforcement peut être située soit à l'intérieur de l'armature de carcasse, soit à l'extérieur de ladite armature, soit entre les nappes de ladite armature, soit aux trois positions précitées. Ladite armature est préférentiellement positionnée axialement autour du point d'intersection A des deux arcs de cercle TA et AE.

De manière préférentielle et comme connu en soi, la distance axiale séparant les deux points de tangence du profil méridien d'armature de carcasse aux deux cercles d'accrochage est inférieure aux deux tiers de la plus grande largeur axiale de l'armature de carcasse.

L'accrochage à la jante, sur laquelle sera monté le pneumatique, peut être réalisé, de manière connue, par des bourrelets comportant chacun au moins une tringle autour de laquelle vient s'ancrer par retournement l'armature de carcasse ; ledit retournement pouvant avoir une longueur telle qu'il puisse être considéré comme partie intégrante de l'armature de renforcement disposé dans la partie basse du flanc de pneumatique. La tringle d'ancrage, du fait du profil méridien d'armature de carcasse peut être de section transversale moindre que la section d'une tringle utilisée de manière courante dans un pneumatique de forme normale et ayant les mêmes dimensions axiale et radiale. Il est avantageux, dans tous les cas où un retournement d'armature de carcasse existe, que ce dernier soit placé dans une zone de faible déformation et il peut être laqué contre la partie principale de ladite armature sans la présence de profilés entre partie principale et retournement.

Le blocage de l'armature de carcasse dans les bourrelets peut aussi être réalisé par insertion de ses bords entre deux armatures d'éléments de renforcement inextensibles et circonférentiels, ou entre la jante elle-même et une armature de renforcement comme ci-dessus.

Les caractéristiques et avantages de l'invention seront mieux comprises à l'aide de la description qui suit et qui se réfère au dessin illustrant à titre non limitatif des exemples d'exécution et sur lequel :

- la figure 1 représente schématiquement en section méridienne une vue d'ensemble du pneumatique conforme à l'invention,

- la figure 2 représente schématiquement, vu en section méridienne le tracé du profil méridien de la ligne moyenne d'armature de carcasse,

- la figure 3 représente schématiquement une variante de profil méridien et d'accrochage d'armature de carcasse.

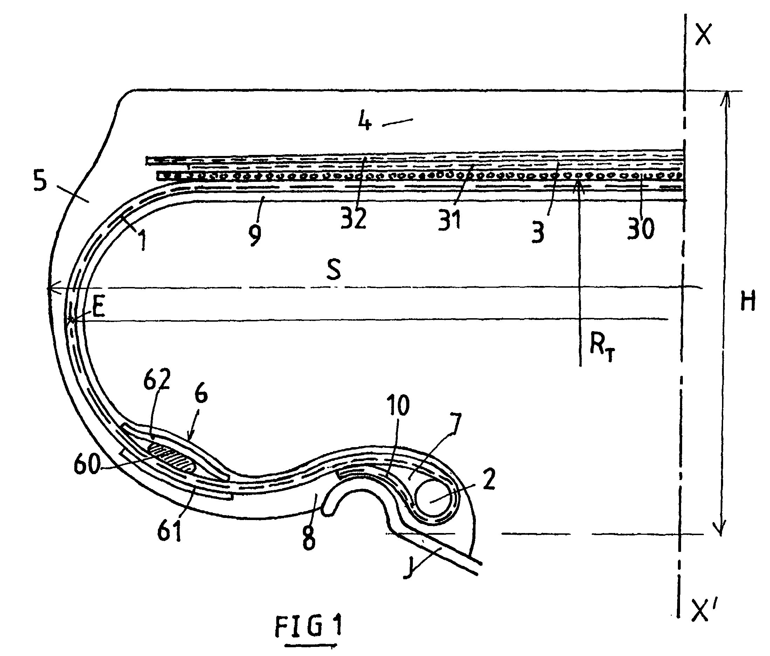

Le pneumatique P de la figure 1 a un rapport de forme H/S égal à 0,55 et il est monté sur une jante J dite 9 x 22.5. L'armature de carcasse (1) est formée d'une seule nappe d'éléments de renforcement qui sont des câbles de polyamide aromatique. Ladite nappe (1) est ancrée dans chaque bourrelet B à une tringle (2) de type tressée, en formant un retournement (10), dont le profil méridien s'enroule autour de l'arc de cercle représentant l'arrondi du crochet de la jante J. Ledit retournement (10) est séparé de la partie principale (1) de la nappe de carcasse par un petit profilé (7) de forme triangulaire. Entre le point E de plus grande largeur axiale de la nappe de carcasse et le bourrelet B, est disposée l'armature de renforcement (6) composée, dans le cas décrit, d'une nappe (61) de câbles métalliques inextensibles radialement à l'intérieur du profil méridien de la nappe de carcasse (1), d'une nappe (62) de câbles métalliques inextensibles radialement à l'extérieur de la nappe de carcasse (1), et entre ladite nappe (1) et la nappe (62) d'un anneau de renforcement (60) formée par enroulement de fils métalliques qui confèrent audit anneau une extensibilité presque parfaite. La nappe de carcasse (1) rejoint tangentiellement une armature de sommet (3), composée, radialement à l'intérieur, d'une nappe (30) de câbles métalliques inextensibles et circonférentiels (il faut entendre par câbles circonférentiels des câbles faisant avec la direction circonférentielle du pneumatique une angle pouvant être compris entre + 2,5° et - 2,5°), et de deux nappes (31) et (32) de câbles métalliques inextensibles parallèles entre eux dans chaque nappe et croisés d'une à la suivante en faisant avec la direction circonférentielle un angle de 45°. Les nappes (30, 31, 32) constituent ce qu'il est courant d'appeler l'armature de sommet de travail, étant entendu que ladite armature de travail peut être complétée par une armature de protection constituée de nappes à éléments élastiques. Le pneumatique P est complété à l'extérieur par une bande de roulement (4) qui, par l'intermédiaire de deux flancs (5), est réunie aux deux bourrelets B, qui prennent appui sur la jante J au moyen d'un mélange de caoutchouc protecteur (8), et à l'intérieur par au moins une couche (9) de mélange caoutchouteux imperméable aux gaz de gonflage susceptibles d'être utilisés dans le pneumatique.

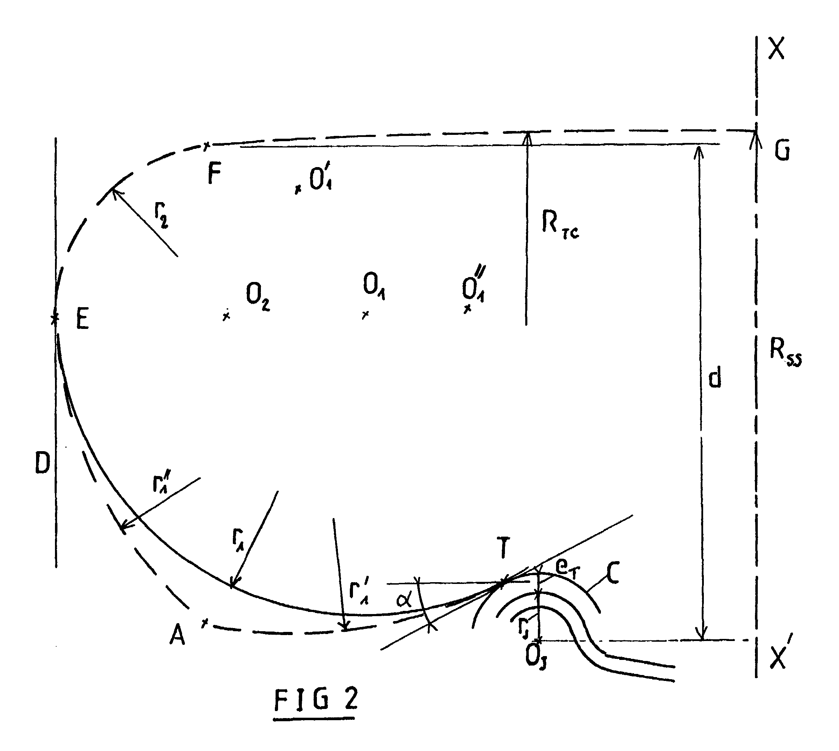

L'armature de sommet (3) est pratiquement cylindrique, le rayon transversal $R_T$ de la face radialement intérieure de la nappe de sommet (30) radialement la plus proche de la nappe de carcasse (1) étant égal à 5 fois son rayon équatorial. Si l'on appelle ligne moyenne de la partie principale de la nappe de carcasse (1) la ligne (figure 2, ligne en pointillés) partageant en deux parties égales l'épaisseur e de ladite partie non retournée de la nappe, le profil méridien de ladite ligne moyenne, dont le rayon équatorial $R_{SS}$ est égal au rayon équatorial de l'armature de sommet diminué d'une quantité égale à la demi-épaisseur e/2 de la nappe (1), est composé en section méridienne, de chaque côté du plan équatorial, d'un arc de cercle GF, centré dans le plan équatorial XX'; et dont le rayon de courbure est $R_{TC}$ égal à $R_T$- e/2, puisque ledit arc GF est parallèle à la nappe de sommet (30) radialement la plus proche de la nappe (1). L'arc GF est, axialement vers l'extérieur et radialement vers l'intérieur, prolongé tangentiellement en F par le troisième arc de cercle EF de centre de courbure $O_2$ et de rayon transversal $r_2$, arc de cercle EF qui tangente en E, point de plus grande largeur axiale $S_0$ du profil méridien de la ligne moyenne, la perpendiculaire D abaissée de E sur l'axe de rotation du pneumatique. La plus grande largeur axiale $S_0$ du profil méridien de la ligne moyenne se déduit de la plus grande largeur axiale S du pneumatique, la différence S - $S_0$ étant égale à l'épaisseur des mélanges de caoutchouc

EP 1 089 886 B1

disposés à l'extérieur de la nappe(1), la valeur S étant généralement une valeur imposée par l'encombrement prévu par le constructeur du véhicule à équiper. L'arc de cercle EF est radialement à l'intérieur prolongé par le deuxième arc de cercle EA, de centre de courbure $O''_1$ et de rayon $r''_1$, supérieur au rayon $r_2$ de l'arc EF. Ledit arc EA est d'une part tangent en E à la perpendiculaire D à l'axe de rotation et d'autre part sécant en A au premier arc de cercle AT de centre de courbure $O'_1$ et de rayon $r'_1$, qui est dans le cas décrit supérieur à $r_2$ et à $r_1$. Ledit premier arc de cercle AT est tangent en T au cercle d'accrochage C de centre de courbure $O_J$ et de rayon de courbure $r_J + e_T$, le centre $O_J$ étant le centre de l'arc de cercle représentant la paroi radialement extérieure de l'arrondi du crochet de la jante J et ayant en conséquence un rayon $r_J$ parfaitement défini par la connaissance de la jante de montage, et la quantité $e_T$ étant définie par le concepteur du pneumatique, en étant au moins égale à deux fois l'épaisseur minimale de l'armature de carcasse. La tangente commune en T au profil méridien de la ligne moyenne de l'armature de carcasse (1) et au cercle d'accrochage C fait avec la parallèle à l'axe de rotation du pneumatique passant par T un angle $\alpha$, ouvert axialement vers l'extérieur et radialement vers l'intérieur, dit négatif et égal, dans le cas décrit, à 13°.

Si l'on appelle d la distance radiale séparant le point F du profil méridien de la ligne moyenne d'armature de carcasse du centre $O_J$ de la paroi extérieure du crochet de jante, distance imposée, il est aisé de déduire géométriquement de ces données, que la quantité d est égale, dans le cas de figure montré, la constante a étant égale à + 1, à la somme de $r_2$ et du produit de cos $\alpha$ par la somme de $r_1 + r_J + e_T$, soit :

$$d = r_2 + (r_1 + r_J + e_T)\cos \alpha.$$

Etant donné que le rayon $r_1$ peut être considéré comme égal à $r_2 R_{SS}/(R_{SS} - r_2)$, il est possible de connaître $r_2$ en fonction des paramètres connus ou imposés que sont d, $r_J$, $e_T$, et cos $\alpha$, $r_2$ étant ce que l'on appelle le rayon moyen de l'arc de cercle EF.

Le cas de figure montré (a = + 1)correspond à un rebord de jante dont le centre $O_J$ est radialement à l'intérieur dudit rebord. Il est facilement compréhensible que la distance d est égale à :

$$d = r_2 + (r_1 - r_J + e_T)\cos \alpha$$

dans le cas où le centre $O_J$ du cercle représentant le rebord de jante est radialement à l'extérieur dudit rebord, la constante a étant alors égale à - 1. De même, lorsque le rebord de jante peut être considéré comme plat, la distance d sera égale à :

$$d = r_2 + (r_1 + e_T)\cos \alpha,$$

la constante a étant alors nulle.

Le rayon de courbure $r_2$ étant connu, le rayon $r_1$ est connu, de même que les rayons $r'_1$ et $r''_1$. Il est alors possible de définir les centres $O'_1$ et $O''_1$ des arcs de cercle EA et AT, de les tracer et de définir le point de tangence T, étant donné que le lieu géométrique du centre $O_J$ est une droite parallèle à l'axe de rotation et distante dudit axe de la quantité $R_{OJ}$ connue.

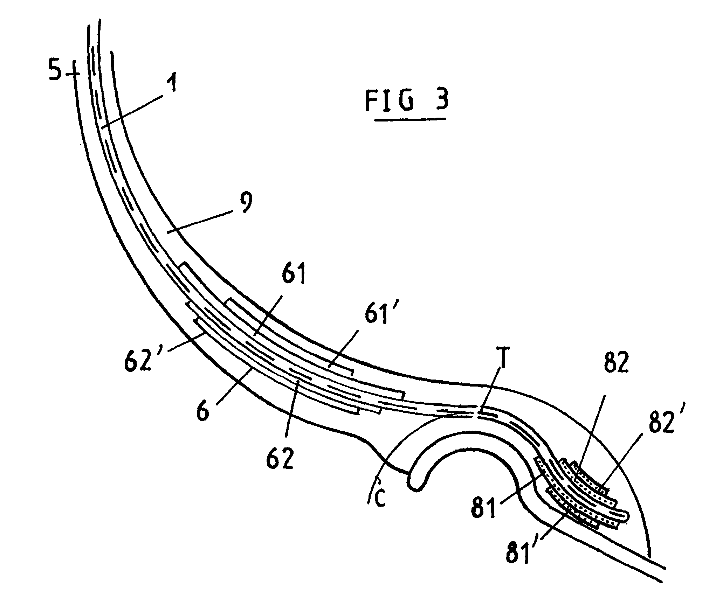

Sur la figure 3 est montrée une variante de pneumatique conforme à l'invention. Ledit pneumatique diffère de celui montré sur la figure 1 par les caractéristiques suivantes :

a) le profil méridien de la nappe de carcasse (1), tangent en T au cercle d'accrochage C, a avec ledit cercle une tangente commune faisant avec la parallèle en T à l'axe de rotation un angle $\alpha$ nul ;

b) l'accrochage de l'armature de carcasse ne se fait pas au moyen d'une tringle mais au moyen d'un ensemble d'éléments de renforcement circonférentiels, qui sont en l'occurrence des câbles métalliques en acier, disposés sous forme de nappes, radialement à l'extérieur et axialement à l'intérieur (82, 82') et radialement à l'intérieur et axialement à l'extérieur (81, 81') ;

c) l'armature de renforcement (6) de la nappe de carcasse (1), entre le point E de plus grande largeur axiale et le point de tangence T est composée aussi de plusieurs nappes d'éléments de renforcement métalliques, câbles d'acier en l'occurrence, à l'intérieur (62, 62') et à l'extérieur (61, 61').

**Revendications**

1. Pneumatique, de rapport de forme H/S compris entre 0,3 et 0,8, comprenant une armature de carcasse (1) <u>formée d'éléments de renforcement radiaux,</u> de rayon équatorial $R_{SS} \pm \Delta R_{SS}$, $\Delta R_{SS}$ étant égal à 1 fois l'épaisseur minimale e de ladite armature de carcasse, et surmontée radialement d'une armature de sommet (3) sensiblement ou quasi-cylindrique, formée d'au moins une nappe de travail (30) d'éléments de renforcement circonférentiels, ladite armature de carcasse (1) étant, de part et d'autre du plan équatorial XX' d'une part tangente à un cercle C dit d'accrochage, la tangente commune au dit cercle C et au profil méridien de l'armature de carcasse (1) faisant, au point de tangence T entre ledit profil et le cercle C d'accrochage et par rapport à une parallèle à l'axe de rotation passant par ledit point de tangence T, un angle $\alpha$ compris entre + 20° et - 80°, et d'autre part, dans sa partie comprise entre ledit point de tangence T et le point E de plus grande largeur axiale, pourvue d'une armature de renforcement (6) d'éléments inextensibles circonférentiellement, **caractérisé en ce que**, vu en section méridienne, la ligne moyenne de chaque moitié de la partie principale de l'armature de carcasse (1) a un profil méridien, lorsque le pneumatique est monté sur sa jante de service et gonflé à sa pression recommandée, composé de quatre arcs de cercle :

   * un premier arc de cercle TA de rayon $r'_1$, compris entre les ou égal aux quantités $r_1$ et/ou $2r_1$, d'une part tangent au cercle d'accrochage C, concentrique au cercle du rebord de jante de rayon $r_J$, disposé radialement au dessus et étant distant dudit rebord d'une quantité $e_T$ au moins égale à deux fois l'épaisseur minimale e de l'armature de carcasse, et d'autre part présentant un point d'intersection A avec :
   * un deuxième arc de cercle AE, de rayon $r''_1$, compris entre les quantités $r_1$ et $2r_1$, tangent à la droite D perpendiculaire à l'axe de rotation passant par le point E de plus grande largeur axiale,
   * un troisième arc de cercle EF de rayon $r_2$, tangent au deuxième arc de cercle AE au point E de plus grande largeur axiale et tangent à un quatrième arc de cercle FG, parallèle à la quasi-cylindrique armature de sommet (3), en un point F, distant de la droite parallèle à l'axe de rotation passant par le centre $O_J$ du cercle d'accrochage C d'une quantité d, les quantités d, $r_1$, $r_2$ satisfaisant aux relations :

   $$d = r_2 + (r_1 + ar_J + e_T) \cos \alpha \qquad \text{et} \qquad r_1 = r_2 R_{SS}/(R_{SS} - r_2),$$

   $\alpha$ étant l'angle que fait la tangente en T avec une parallèle à l'axe de rotation, et a étant une constante pouvant prendre les valeurs -1, 0, ou+ 1,
   * un quatrième arc de FG de rayon $R_{TC}$ égal au rayon transversal $R_T$ de l'armature de sommet, diminué d'au plus l'épaisseur minimale e de l'armature de carcasse,

   et **en ce que** la largeur de l'armature de sommet (3) de travail est comprise entre la distance séparant les deux points F de tangence dudit profil méridien à l'armature de sommet (3) et ladite distance augmentée de $2r_2/3$.

2. Pneumatique selon la revendication 1, **caractérisé en ce que** l'armature de sommet (3) est constituée d'une part d'une nappe (30) axialement continue et formée d'éléments de renforcement circonférentiels inextensibles, et d'autre part de deux nappes (31) et (32) d'éléments de renforcement inextensibles, parallèles entre eux dans chaque nappe et croisés d'une nappe à la suivante en faisant avec la direction circonférentielle un angle pouvant être compris entre 40° et 55°.

3. Pneumatique selon l'une des revendications 1 à 2, **caractérisé en ce que** l'armature de renforcement (6) qui renforce l'armature de carcasse (1), de chaque côté du plan équatorial XX' et dans sa partie comprise radialement entre le point de tangence T à l'accrochage et le point E de plus grande largeur axiale $S_0$, est sensiblement inextensible circonférentiellement, et constituée d'une simple tringle de type connu.

4. Pneumatique selon la revendication 3, **caractérisé en ce que** l'armature de renforcement (6) est complétée par au moins une nappe d'éléments circonférentiels inextensibles, de préférence métalliques.

5. Pneumatique selon l'une des revendications 1 à 4, **caractérisé en ce que** la distance axiale séparant les deux points de tangence T du profil méridien d'armature de carcasse (1) aux deux cercles C d'accrochage est inférieure aux deux tiers de la plus grande largeur axiale $S_0$ de l'armature de carcasse (1).

6. Pneumatique selon l'une des revendications 1 à 5, **caractérisé en ce que** l'armature de carcasse (1) est ancrée dans chaque bourrelet à au moins une tringle (2) pour former un retournement (10).

7. Pneumatique selon la revendication 6, **caractérisé en ce que** le retournement a une longueur telle qu'il fasse partie intégrante de l'armature de renforcement (6).

8. Pneumatique selon l'une des revendications 1 à 5, **caractérisé en ce que** le blocage de l'armature de carcasse (1) dans les bourrelets se réalise par insertion des bords de ladite armature entre deux armatures d'éléments de renforcement inextensibles et circonférentiels, ou entre la jante elle-même et une armature de renforcement comme ci-dessus.

9. Pneumatique selon des revendications 1 à 5, **caractérisé en ce que** l'armature de carcasse (1) constitue un tore fermé.

**Patentansprüche**

1. Luftreifen mit einem Formverhältnis H/S zwischen 0,3 und 0,8, der eine Karkassenbewehrung (1) aufweist, die aus radialen Verstärkungselementen mit einem Äquatorialradius Rss $\pm \Delta R_{SS}$ besteht, wobei $\Delta R_{SS}$ der minimalen Stärke der Bewehrung gleicht, und radial von einer im wesentlichen oder praktisch halbzylindrischen Scheitelbewehrung (3) überlagert wird, die aus mindestens einer Arbeitslage (30) von Umfangsverstärkungselementen gebildet wird, wobei die Karkassenbewehrung (1) zu beiden Seiten der Äquatorialebene XX' einerseits einen sogenannten Befestigungskreis C berührt, wobei die dem Kreis C und dem Meridianprofil der Karkassenbewehrung (1) gemeinsame Tangente mit dem Berührungspunkt zwischen dem Profil und dem Befestigungskreis C, und in bezug auf eine Parallele zur Drehachse, die durch den Berührungspunkt verläuft, einen Winkel zwischen + 20° und - 80° bildet, und andererseits in ihrem Bereich zwischen dem Berührungspunkt T und dem Punkt E größter axialer Breite mit einer Verstärkungsbewehrung (6) aus in Umfangsrichtung unausdehnbaren Elementen versehen ist, **dadurch gekennzeichnet, daß**, im Meridianschnitt gesehen, die mittlere Linie jeder Hälfte des Hauptbereichs der Karkassenbewehrung (1) ein Meridianprofil aufweist, wenn der Luftreifen auf seine Dienstfelge montiert und auf seinen empfohlenen Druck aufgepumpt ist, das aus vier Kreisbögen besteht:

   * einem ersten Kreisbogen TA, mit einem Radius $r'_1$, zwischen den oder gleich den Größen $r_1$ und/oder $2r_1$, der einerseits den Befestigungskreis C berührt, der konzentrisch zum Kreis des Felgenrands mit dem Radius $r_J$ ist, radial über dem Rand und mit einem Abstand er zu diesem Rand angeordnet ist, der mindestens doppelt so groß ist wie die minimale Stärke e der Karkassenbewehrung, und andererseits einen Schnittpunkt A mit

   * einem zweiten Kreisbogen AE mit einem Radius r''i zwischen den Größen $r_1$ und $2r_1$ aufweist, der die zur Drehachse senkrechte Gerade berührt, die durch den Punkt E größter axialer Breite verläuft,

   * einem dritten Kreisbogen EF mit einem Radius $r_2$, der den zweiten Kreisbogen AE im Punkt E größter axialer Breite und einen vierten Kreisbogen FG, parallel zur praktisch zylindrischen Scheitelbewehrung (3), in einem Punkt F berührt, der von der Geraden parallel zur Drehachse, die durch das Zentrum $O_J$ des Befestigungskreises C verläuft, um eine Größe d entfernt ist, wobei die Größen d, $r_1$, $r_2$ die Gleichungen erfüllen:

$$d = r_2 + (r_1 + ar_J + e_r) \cos \alpha \qquad \text{und} \qquad r_1 = r_2 R_{SS}/(R_{SS} - r_2),$$

   wobei $\alpha$ der Winkel ist, den die Tangente in T mit einer Parallelen zur Drehachse bildet, und a eine Konstante ist, die die Werte -1, 0 oder +1 annehmen kann,

   * einem vierten Kreisbogen FG mit einem Radius $R_{TC}$ gleich dem Querradius $R_T$ der Scheitelbewehrung, verringert um höchstens die minimale Stärke e der Karkassenbewehrung,

   und daß die Breite der Arbeits-Scheitelbewehrung (3) zwischen dem Abstand, der die beiden Berührungspunkte F zwischen dem Meridianprofil und der Scheitelbewehrung (3) trennt, und diesem Abstand vermehrt um $2r_2/3$ liegt.

2. Luftreifen nach Anspruch 1, **dadurch gekennzeichnet, daß** die Scheitelbewehrung (3) einerseits aus einer axial durchgehenden Lage (30) von unausdehnbaren Umfangsverstärkungselementen, und andererseits aus zwei Lagen (31) und (32) von unausdehnbaren Verstärkungselementen gebildet wird, die in jeder Lage zueinander parallel sind und sich von einer Lage zur nächsten kreuzen, indem sie mit der Umfangsrichtung einen Winkel bilden, der zwischen zwischen 40° und 55°, liegen kann.

3. Luftreifen nach einem der Ansprüche 1 und 2, **dadurch gekennzeichnet, daß** die Verstärkungsbewehrung (6), die die Karkassenbewehrung (1) auf jeder Seite der Äquatorialebene XX' und in ihrem radial zwischen dem Berührungspunkt T mit der Befestigung und dem Punkt E größter axialer Breite So liegenden Bereich verstärkt, im wesentlichen in Umfangsrichtung unausdehnbar ist und aus einem einzigen Wulstkern bekannter Art besteht.

4. Luftreifen nach Anspruch 3, **dadurch gekennzeichnet, daß** die Verstärkungsbewehrung (6) durch mindestens eine Lage von unausdehnbaren, vorzugsweise metallischen Umfangselementen vervollständigt wird.

5. Luftreifen nach einem der Ansprüche 1 bis 4, **dadurch gekennzeichnet, daß** die axiale Entfernung zwischen den beiden Berührungspunkten T zwischen dem Meridianprofil der Karkassenbewehrung (1) und den beiden Befestigungskreisen C geringer ist als zwei Drittel der größten axialen Breite So der Karkassenbewehrung (1).

6. Luftreifen nach einem der Ansprüche 1 bis 5, **dadurch gekennzeichnet, daß** die Karkassenbewehrung (1) in jedem Wulst an mindestens einem Wulstkern (2) verankert ist, um einen Umschlag (10) zu bilden.

7. Luftreifen nach Anspruch 6, **dadurch gekennzeichnet, daß** der Umschlag eine solche Länge hat, daß er ein integrierender Bestandteil der Verstärkungsbewehrung (6) ist.

8. Luftreifen nach einem der Ansprüche 1 bis 5, **dadurch gekennzeichnet, daß** die Blockierung der Karkassenbewehrung (1) in den Wülsten durch Einfügung ihrer Ränder zwischen zwei Bewehrungen aus unausdehnbaren Umfangsverstärkungselementen oder zwischen die Felge selbst und eine wie oben beschriebenen Verstärkungsbewehrung erfolgt.

9. Luftreifen nach einem der Ansprüche 1 bis 5, **dadurch gekennzeichnet, daß** die Karkassenbewehrung (1) einen geschlossenen Torus bildet.

## Claims

1. Tyre, with a form ratio H/S between 0.3 and 0.8, comprising a carcass reinforcement (1) formed of radial reinforcement elements, having equatorial radius $R_{SS} \pm \Delta R_{SS}$, where $\Delta R_{SS}$ equals 1 times the minimum thickness of the said carcass reinforcement, covered radially by a crown reinforcement (3) which is essentially or quasi-cylindrical, formed of at least one working ply (30) of circumferential reinforcement elements, the said carcass reinforcement (1) being, on each side of the equatorial plane XX', on the one hand tangential to a circle C termed the holding circle, the common tangent to the said circle C and to the meridian profile of the carcass reinforcement (1) making an angle $\alpha$ between 20° and -80° at the tangency point T between the said profile and the holding circle C with respect to a line parallel to the rotation axis and passing through the said tangency point T, and on the other hand, in its portion located between the said tangency point T and the point E of greatest axial width, being provided with a reinforcement armature (6) of circumferentially non-extensible elements,

   **characterised in that**
   viewed in meridian section when the tyre is fitted on its working rim and inflated to its recommended pressure, the centreline of each half of the main portion of the carcass reinforcement (1) has a meridian profile which consists of four circular arcs:

   * a first circular arc TA of radius $r'_1$ comprised between or equal to the values $r_1$ and/or $2r_1$, which is on the one hand tangential to the holding circle C, concentric with the rim edge of radius $r_J$, positioned radially above and separated from the said edge by a distance $e_T$ at least equal to twice the minimum thickness of the carcass reinforcement, and which, on the other hand, has a point of intersection A with:

   * a second circular arc AE of radius $r''_1$, comprised between the values $r_1$ and $2r_1$, which is tangential to the line D perpendicular to the rotation axis and passing through the point E of greatest axial width,

   * a third circular arc EF of radius $r_2$, which is tangential to the second circular arc AE at the point E of greatest axial width and also tangential to a fourth circular arc FG parallel to the quasi-cylindrical crown reinforcement (3), at a point F separated by a distance d from the line parallel to the rotation axis and passing through the centre $O_J$ of the holding circle C, such that the quantities, d, $r_1$ and $r_2$ satisfy the relationships:

$$d = r_2 + (r_1 - ar_J + e_T) \cos \alpha \qquad \text{and} \qquad r_1 = r_2 R_{SS}/(R_{SS} - r_2)$$

where $\alpha$ is the angle between the tangent at T and a line parallel to the rotation axis, and **a** is a constant which may have the values -1,0 or +1,

* a fourth arc FG, of radius $R_{TC}$ equal to the transverse radius $R_T$ of the crown reinforcement reduced by at most the minimum thickness e of the carcass reinforcement,

and **in that** the width of the working crown reinforcement (3) is comprised between the distance separating the two tangency points F of the said meridian profile to the crown reinforcement (3) and the said distance increased by $2r_2/3$.

2. Tyre according to Claim 1,
   **characterised in that**
   the crown reinforcement (3) consists on the one hand of an axially continuous ply (30) formed of non-extensible circumferential reinforcement elements, and on the other hand of two plies (31) and (32) of non-extensible reinforcement elements, which are mutually parallel within each ply and crossed over from one ply to the next, making an angle of between 40° and 55° with respect to the circumferential direction.

3. Tyre according to either of Claims 1 and 2,
   **characterised in that**
   on each side of the equatorial plane XX' and in its portion located radially between the tangency point T to the holding circle and the point E of greatest axial width $S_0$, the reinforcement armature (6) that reinforces the carcass reinforcement (1) is essentially circumferentially non-extensible and consists of a simple bead-wire of known type.

4. Tyre according to Claim 3,
   **characterised in that**
   the reinforcement armature (6) is completed by at least one ply of non-extensible circumferential elements, preferably metallic,

5. Tyre according to any of Claims 1 to 4,
   **characterised in that**
   the axial distance separating the two tangency points T of the meridian profile of the carcass reinforcement (1) to the two holding circles C is smaller than two-thirds of the greatest axial width $S_0$ of the carcass reinforcement (1).

6. Tyre according to any of Claims 1 to 5,
   **characterised in that**
   the carcass reinforcement (1) is anchored in each bead to at least one bead-wire (2) with a portion (10) turned up.

7. Tyre according to Claim 6,
   **characterised in that**
   the turned up portion is long enough to form an integral part of the reinforcement armature (6).

8. Tyre according to any of Claims 1 to 5,
   **characterised in that**
   the carcass reinforcement (1) is anchored fast in the beads by inserting the edges of the said reinforcement between two armatures of non-extensible and circumferential reinforcement elements, or between the rim itself and a reinforcement element as above.

9. Tyre according to Claims 1 to 5,
   **characterised in that**
   the carcass reinforcement (1) constitutes a closed torus.

FIG 1

FIG 2

FIG 3